(19) Europäisches Patentamt
European Patent Office
Office européen des brevets

(11) **EP 4 738 459 A1**

(12) **EUROPEAN PATENT APPLICATION**
published in accordance with Art. 153(4) EPC

(43) Date of publication:
06.05.2026 Bulletin 2026/19

(21) Application number: 24855355.4

(22) Date of filing: 13.05.2024

(51) International Patent Classification (IPC):
$H01M\ 4/36^{(2006.01)}$  $H01M\ 4/58^{(2010.01)}$
$H01M\ 4/505^{(2010.01)}$  $H01M\ 10/0525^{(2010.01)}$

(52) Cooperative Patent Classification (CPC):
H01M 4/13; H01M 4/36; H01M 4/505; H01M 4/58;
H01M 10/0525; H01M 10/42; Y02E 60/10

(86) International application number:
PCT/CN2024/092845

(87) International publication number:
WO 2025/039625 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.08.2023 CN 202311075173

(71) Applicant: Contemporary Amperex Technology
Co., Limited
Ningde, Fujian 352100 (CN)

(72) Inventors:
• XIANG, Chengcheng
Ningde, Fujian 352100 (CN)

• CHEN, Xuefang
Ningde, Fujian 352100 (CN)
• YAO, Bin
Ningde, Fujian 352100 (CN)
• LIU, Jiang
Ningde, Fujian 352100 (CN)
• LIU, Xiaomei
Ningde, Fujian 352100 (CN)

(74) Representative: Jacob, Reuben Ellis et al
Maucher Jenkins
Seventh Floor Offices
Artillery House
11-19 Artillery Row
London SW1P 1RT (GB)

(54) **LITHIUM SECONDARY BATTERY AND ELECTRIC DEVICE**

(57)    A lithium secondary battery and an electric device. The lithium secondary battery comprises a positive electrode sheet, the positive electrode sheet comprises a first active layer coated on at least one side of a positive electrode current collector and containing a positive electrode active material and a polycrystalline lithium supplementing agent and a second active layer coated on the side of the first active layer away from the current collector and containing a positive electrode active material, and the lithium supplementing agent comprises at least one of $Li_xNi_{1-y}M_yO_2$, $Li_xRO_2$, and $LiNi_\alpha Co_\beta Mn_\gamma O_2$, wherein M comprises one or more of Cu, Al, and Mn; R comprises one of Ni and Mn; $1 < x < 2$, $0 < y \leq 0.01$, $\alpha + \beta + \gamma = 1$ and $\alpha \geq 0.5$. The lithium supplementing agent rapidly releases sufficient active lithium during initial charge, thereby improving the energy density of a secondary battery, and persistently releases active lithium during a cycle, thereby slowing down the attenuation of a battery cell.

FIG. 3

EP 4 738 459 A1

## Description

### CROSS-REFERENCE TO RELATED APPLICATIONS

This application claims priority to Chinese Patent Application No. 202311075173.5, filed on August 24, 2023 and entitled "LITHIUM SECONDARY BATTERY AND ELECTRIC APPARATUS", which is incorporated herein by reference in its entirety.

### TECHNICAL FIELD

This application relates to the field of lithium battery technology, and in particular, to a lithium secondary battery and an electric apparatus.

### BACKGROUND

Due to advantages such as high discharge voltage, high energy density, and long cycle life, lithium-ion batteries have been widely used in various portable electronic devices such as laptop computers, mobile phones, and cameras, and are also increasingly favored in high-tech fields such as aerospace satellites, electric vehicles, and military applications. These applications all require lithium-ion batteries with better capacity and cycle life.

Active lithium in a lithium-ion battery comes from a positive electrode material. During the first charge-discharge cycle of the lithium-ion battery, active lithium is consumed on a negative electrode surface to form a solid electrolyte film being an SEI film, resulting in initial capacity loss (Initial Capacity Loss, ICL), thus leading to capacity fade and reduced cycling efficiency of the lithium-ion battery. Therefore, developing simple and efficient lithium supplementation technology is of great significance.

### SUMMARY

This application is made in view of the above issues and intended to provide a positive electrode plate, where the positive electrode plate includes a first active layer applied on at least one side of a positive electrode current collector and containing a positive electrode active material and a polycrystalline lithium supplementing agent, and a second active layer applied on a side of the first active layer away from the current collector and containing a positive electrode active material; where the lithium supplementing agent includes at least one of $Li_xNi_{1-y}M_yO_2$, $Li_xRO_2$, and $LiNi_\alpha Co_\beta Mn_\gamma O_2$, where

M includes one or more of Cu, Al, and Mn, and R includes one of Ni and Mn; and

$$1 < x < 2,\ 0 < y \leq 0.01,\ \alpha + \beta + \gamma = 1,\ \text{and}\ \alpha \geq 0.5.$$

During cycling of a secondary battery, the polycrystalline lithium supplementing agent in the first active layer exhibits faster decay during the first charge due to significant concentration polarization, rapidly releasing sufficient active lithium to compensate for active lithium consumed on a negative electrode surface during the first charge-discharge cycle, thereby improving a first-cycle specific capacity of the secondary battery and increasing the energy density of the secondary battery. Lithium deintercalated from the lithium supplementing agent cannot be reintercalated into the lithium supplementing agent, and the positive electrode active material in the second active layer accepts active lithium deintercalated from the lithium supplementing agent. Therefore, the lithium supplementing agent persistently releases all lithium inside during cycling, significantly improving the cycling performance of the secondary battery, thereby mitigating cell degradation.

In any embodiment, the lithium supplementing agent includes one or more of $Li_xNiO_2$, $Li_xMnO_2$, $Li_xNi_{1-y}M_yO_2$, and $LiNi_\alpha Co_\beta Mn_\gamma O_2$, where M includes one or more of Cu, Al, and Mn; and R includes one of Ni and Mn. Optionally, $1.1 < x < 1.8$, $0 < y \leq 0.01$, $\alpha + \beta + \gamma = 1$, $\alpha \geq 0.5$, $0 < \beta < 1$, and $0 < \gamma < 1$.

In any embodiment, a volume-based median particle size $D_v50$ of the lithium supplementing agent is 2.5-12.5 μm, optionally 3.5-11.5 μm. $D_v50$ of the lithium supplementing agent within the range helps control the lithium deintercalation amount and residual amount of the lithium supplementing agent during the first charge-discharge cycle, allowing the positive electrode plate to achieve a balance between an initial specific capacity and a later-stage slow-release lithium amount. Additionally, $D_v50$ of the lithium supplementing agent within the range helps reduce the gas generation performance of the secondary battery, improving the storage performance of the secondary battery.

In any embodiment, a mass percentage p/q of the lithium supplementing agent in the first active layer is not less than 0.5% and not more than 12%, optionally not less than 2% and not more than 10%, where p is a ratio of a mass of the lithium supplementing agent in the first active layer to a total mass of the first active layer and the second active layer of the positive electrode plate; and q is a ratio of a mass of the first active layer to the total mass of the first active layer and the second active layer of the positive electrode plate. The mass percentage p/q of the lithium supplementing agent in the first active layer within an appropriate range helps improve a capacity retention rate or first-cycle specific capacity of the secondary battery.

In any embodiment, based on the total mass of the first active layer and the second active layer of the positive electrode plate, the mass percentage p of the lithium supplementing agent in the first active layer is not more than 5% and not less than 0.2%, optionally 0.8% to 4%. The lithium supplementing agent within the range can provide sufficient active lithium, slowing down a degradation speed of a cell of the secondary battery, improving the cycling performance of the secondary battery, and reducing safety hazards caused by side reactions of the lithium supplementing agent.

In any embodiment, the ratio q of the mass of the first active layer to the total mass of the first active layer and the second active layer of the positive electrode plate is 10% to 70%, optionally 20% to 60%. The ratio q of the mass of the first active layer to the total mass of the first active layer and the second active layer of the positive electrode plate within an appropriate range helps improve the first-cycle specific capacity of the secondary battery, thereby increasing energy density.

In any embodiment, the positive electrode active materials in the first active layer and the second active layer each include one or more of lithium-containing phosphate with an olivine structure, lithium transition metal oxide, and respective modified compounds thereof, optionally one or more of lithium iron phosphate and modified compounds thereof.

In any embodiment, the positive electrode active materials in the first active layer and the second active layer each include $Li_zFe_{1-k}Me_kPO_4$ and coating modified compounds thereof, where Me is selected from one or more of Sc, V, Cr, Mn, Ti, Al, Co, Ni, Cu, and Zn, $0.8 \leq z \leq 1.3$, and $0 \leq k \leq 0.7$.

Lithium iron phosphate and the modified compounds thereof have good stability, and secondary batteries using them as positive electrode active materials can have a longer cycle life.

In any embodiment, a cycling voltage window of the secondary battery prepared from the positive electrode plate is 2.0-3.8 V or 2.0-4.1 V. The voltage window in this range can be used for secondary batteries with a positive electrode active material $Li_zFe_{1-k}Me_kPO_4$ ($0.8 \leq z \leq 1.3$ and $0 \leq k \leq 0.7$) and coating modified compounds thereof, reducing the release of the lithium supplementing agent during the first cycle while meeting the cycling needs of the secondary battery, facilitating the slow release of the lithium supplementing agent during the cycling of the secondary battery, and also helping avoid high-voltage decomposition of an electrolyte.

A second aspect of this application provides a lithium secondary battery, where the battery includes the positive electrode plate provided in a first aspect.

In any embodiment, a cycling voltage window of a secondary battery prepared from the positive electrode plate is 2.0-4.1 V. In any embodiment, the cycling voltage window of the secondary battery prepared from the positive electrode plate is 2.0-3.8 V. In any embodiment, an upper limit voltage of a cycling voltage of the secondary battery prepared from the positive electrode plate is 3.6-3.8 V, optionally 3.65-3.8 V. The upper limit voltage within this range enables the lithium supplementing agent to be released at an initial stage of battery cycling and allows for slow release of the lithium supplementing agent during cycling, slowing down the degradation speed of the battery.

A third aspect of this application provides an application of the lithium secondary battery provided in the second aspect.

In any embodiment, a cycling voltage window of the lithium secondary battery is 2.0-4.1 V. In any embodiment, the cycling voltage window of the lithium secondary battery is 2.0-3.8 V, or an upper limit voltage is 3.6-3.8 V, optionally 3.65-3.8 V. The voltage window within this range can avoid rapid release of the lithium supplementing agent and high-voltage decomposition of an electrolyte, thereby mitigating degradation of the secondary battery, improving the stability of the electrolyte of the secondary battery, and prolonging the cycle life of the secondary battery.

A fourth aspect of this application provides an electric apparatus including the lithium secondary battery described in the second aspect.


**BRIEF DESCRIPTION OF DRAWINGS**


FIG. 1 is a schematic diagram of a mechanism of sustained release of active lithium by a lithium supplementing agent in a prepared secondary battery;
FIG. 2 shows a difference between a lithium supplementation amount and a lithium deintercalation amount in a lithium half-cell prepared using a lithium supplementing agent;
FIG. 3 shows battery capacity retention measurement results of secondary batteries prepared in Example 1 and Comparative Example 3;
FIG. 4 is a schematic diagram of a secondary battery according to an embodiment of this application;

FIG. 5 is an exploded view of the secondary battery according to the embodiment of this application in FIG. 4;

FIG. 6 is a schematic diagram of a battery module according to an embodiment of this application;

FIG. 7 is a schematic diagram of a battery pack according to an embodiment of this application;

FIG. 8 is an exploded view of the battery pack according to the embodiment of this application shown in FIG. 7;

FIG. 9 is a schematic diagram of an electric apparatus using a secondary battery as a power source according to an embodiment of this application;

FIG. 10 is a scanning electron microscope image of a lithium supplementing agent prepared in Example 1 of this application; and

FIG. 11 is a scanning electron microscope image of a lithium supplementing agent prepared in Comparative Example 2 of this application.

Description of reference signs:
1. battery pack; 2. upper box body; 3. lower box body; 4. battery module; 5. secondary battery; 51. housing; 52. electrode assembly; and 53. cover plate.

## DESCRIPTION OF EMBODIMENTS

Embodiments that specifically disclose a positive electrode active material and a manufacturing method thereof, a positive electrode plate, a secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. Additionally, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. Additionally, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. Additionally, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all the technical features and optional technical features of this application can be combined with each other to form new technical solutions.

Unless otherwise specified, all steps in this application can be performed sequentially or randomly, preferably sequentially. For example, a method including steps (a) and (b) indicates that the method may include steps (a) and (b) performed sequentially or may include steps (b) and (a) performed sequentially. For example, the above method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B." More specifically, any one of the following conditions satisfies the condition "A or B": A is true (or present) and B is false (or not present); A is false (or not present) and B is true (or present); or both A and B are true (or present).

A lithium secondary battery includes a positive electrode plate, a negative electrode plate, an electrolyte, and a separator. During charge and discharge of the battery, active ions (for example, lithium ions) are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent short circuits between positive and negative electrodes and to allow the active ions to pass through.

During the first charge-discharge cycle of a lithium-ion battery, active lithium is consumed on a negative electrode surface to form an SEI film, resulting in initial capacity loss, thus leading to reduced energy density of the lithium-ion battery, reducing cycling capacity of a secondary battery, and affecting degradation and cycling efficiency of the secondary battery. This application provides a positive electrode plate, where the positive electrode plate includes a lithium supplementing agent. Supplementing active lithium to the positive electrode through the lithium supplementing agent can reduce the irreversible loss of active lithium in a secondary battery prepared from the positive electrode plate, thereby reducing the initial capacity loss of the secondary battery.

In some embodiments, the positive electrode plate includes a first active layer applied on at least one side of a positive electrode current collector and a second active layer applied on a side of the first active layer away from the current collector. The first active layer contains a positive electrode active material and a polycrystalline lithium supplementing agent; and the second active layer contains a positive electrode active material.

In this application, the "lithium supplementing agent" refers to a lithium-containing metal oxide that can deintercalate active lithium and supplement active lithium to the positive electrode active material during cycling of the secondary battery. During cycling of a lithium secondary battery containing the positive electrode plate, the lithium supplementing agent in the first active layer exhibits greater concentration polarization and loses lithium intercalation sites more quickly, resulting in faster decay. Lithium deintercalated from the lithium supplementing agent cannot be reintercalated into the lithium supplementing agent, allowing the lithium supplementing agent to persistently release all lithium inside. The positive electrode active material in the second active layer accepts the active lithium deintercalated from the lithium supplementing agent in the first active layer, slowing down a degradation speed of a cell and improving the cycling performance of a lithium-ion battery.

The lithium supplementing agent in the first active layer generates some pore structures due to volume changes during cycling, which also helps improve the kinetic performance of the positive electrode plate.

In this application, a polycrystal refers to secondary particles formed by agglomeration of a plurality of primary particles, and a polycrystalline form can be understood as a morphology similar to secondary particles. The polycrystalline lithium supplementing agent includes secondary particles formed by agglomeration and is typically prepared by secondary particle agglomeration techniques (for example, sintering). In the polycrystalline lithium supplementing agent, a particle size distribution of secondary particles is dominant in lithium supplementing agent powder, and persons skilled in the art can determine whether the lithium supplementing agent is polycrystalline based on common knowledge and general technical knowledge in the art. In one example, the lithium supplementing agent powder appears entirely or substantially entirely as agglomerated particles under a scanning electron microscope.

A single crystal refers to a crystal of primary particles and is typically a single fine grain. A single-crystal form can be understood as a morphology similar to primary particles. A single-crystal lithium supplementing agent contains primary particle crystals of the lithium supplementing agent. In the single-crystal lithium supplementing agent, a particle size distribution of primary particles is dominant in lithium supplementing agent powder, and persons skilled in the art can determine whether the lithium supplementing agent is single-crystal based on common knowledge and general technical knowledge in the art. In one example, the lithium supplementing agent powder appears substantially entirely as primary particles under a scanning electron microscope.

In this application, primary particles are also known as original particles. A plurality of original particles undergo agglomeration to form agglomerated particles called "secondary particles." The acting forces causing agglomeration between particles may be physical bonding (for example, van der Waals forces) or chemical bonding (for example, oxygen bridge bonds); and agglomeration between particles can be achieved through external pressure or assisted by additional substances (for example, chemical substances with adhesive properties).

Compared to the single-crystal lithium supplementing agent, the polycrystalline lithium supplementing agent has poorer stability during battery cycling, and is more prone to structural collapse, making active lithium deintercalated easily and reintercalated difficultly, and allowing for rapid lithium supplementation in the first cycle and sustained lithium release in subsequent cycles.

In some embodiments, the lithium supplementing agent includes at least one of $Li_xNi_{1-y}M_yO_2$, $Li_xRO_2$, and $LiNi_\alpha Co_\beta Mn_\gamma O_2$, where M includes one or more of Cu, Al, and Mn, and R includes one of Ni and Mn; and

$$1 < x < 2, \; 0 < y \leq 0.01, \; \alpha + \beta + \gamma = 1, \text{ and } \alpha \geq 0.5.$$

In some embodiments, the lithium supplementing agent includes one or more of $Li_xNiO_2$, $Li_xMnO_2$, $Li_xNi_{1-y}M_yO_2$, and $LiNi_\alpha Co_\beta Mn_\gamma O_2$, where M includes one or more of Cu, Al, and Mn, R includes one of Ni and Mn, $1.1 < x < 1.8$, $0 < y \leq 0.01$, $\alpha + \beta + \gamma = 1$, $\alpha \geq 0.5$, $0 < \beta < 1$, and $0 < \gamma < 1$.

In some embodiments, the lithium supplementing agent includes one or more of $Li_xNiO_2$ ($1 < x < 2$). In some embodiments, $1.1 < x < 1.8$, $1.5 < x < 1.8$, $1.5 < x < 2$, and $1.1 < x < 1.5$. In some embodiments, the lithium supplementing agent may be one or more of $Li_{1.1}NiO_2$, $Li_{1.3}NiO_2$, $Li_{1.5}NiO_2$, $Li_{1.6}NiO_2$, $Li_{1.7}NiO_2$, and $Li_{1.9}NiO_2$.

In some embodiments, the lithium supplementing agent includes one or more of $Li_xMnO_2$ ($1 < x < 2$). In some embodiments, $1.1 < x < 1.8$, $1.5 < x < 1.8$, $1.5 < x < 2$, and $1.1 < x < 1.5$. In some embodiments, the lithium supplementing agent may be one or more of $Li_{1.8}MnO_2$, $Li_{1.5}MnO_3$, $Li_{1.3}MnO_2$, $Li_{1.1}MnO_2$, $Li_{1.7}MnO_2$, and $Li_{1.6}MnO_2$.

In some embodiments, the lithium supplementing agent includes one or more of $Li_xNi_{1-y}M_yO_2$, where $1 < x < 2$, $0 < y \leq 0.01$. In some embodiments, $1.1 < x < 1.8$, $1.5 < x < 1.8$, $1.5 < x < 2$, and $1.1 < x < 1.5$. In some embodiments, the lithium supplementing agent may be $Li_{1.8}Ni_{0.99}Cu_{0.01}O_2$, $Li_{1.5}Ni_{0.99}Cu_{0.01}O_2$, $Li_{1.1}Ni_{0.99}Cu_{0.01}O_2$, $Li_{1.8}Ni_{0.999}Cu_{0.001}O_2$, $Li_{1.8}Ni_{0.995}Cu_{0.005}O_2$, $Li_{1.7}Ni_{0.99}Cu_{0.01}O_2$, $Li_{1.6}Ni_{0.99}Cu_{0.01}O_2$, $Li_{1.3}Ni_{0.99}Cu_{0.01}O_2$, $Li_{1.8}Ni_{0.99}Al_{0.01}O_2$, $Li_{1.5}Ni_{0.99}Al_{0.01}O_2$, $Li_{1.1}Ni_{0.99}Al_{0.01}O_2$, $Li_{1.8}Ni_{0.999}Al_{0.001}O_2$, $Li_{1.8}Ni_{0.995}Al_{0.005}O_2$, $Li_{1.7}Ni_{0.99}Al_{0.01}O_2$, $Li_{1.6}Ni_{0.99}Al_{0.01}O_2$, $Li_{1.3}Ni_{0.99}Al_{0.01}O_2$, $Li_{1.8}Ni_{0.99}Mn_{0.01}O_2$, $Li_{1.5}Ni_{0.99}Mn_{0.01}O_2$, $Li_{1.1}Ni_{0.99}Mn_{0.01}O_2$, $Li_{1.8}Ni_{0.999}Mn_{0.001}O_2$, $Li_{1.8}Ni_{0.995}Mn_{0.005}O_2$, $Li_{1.7}Ni_{0.99}Mn_{0.01}O_2$, $Li_{1.6}Ni_{0.99}Mn_{0.01}O_2$, or $Li_{1.3}Ni_{0.99}Mn_{0.01}O_2$.

In some embodiments, the lithium supplementing agent includes one or more of $LiNi_\alpha Co_\beta Mn_\gamma O_2$, where $\alpha + \beta + \gamma = 1$, $\alpha \geq 0.5$, $0 < \beta < 1$, and $0 < \gamma < 1$. In some embodiments, in $LiNi_\alpha Co_\beta Mn_\gamma O_2$, a ratio of $\alpha : \beta : \gamma$ is 5:2:3, 6:2:2, or 8:1:1. In some embodiments, the lithium supplementing agent includes one or more of $LiNi_{0.5}Co_{0.2}Mn_{0.3}O_2$ (NCM523) and $LiNi_{0.8}Co_{0.1}Mn_{0.1}O_2$ (NCM811).

In the lithium supplementing agent of this application, with consideration of possible crystal defects in the lithium supplementing agent crystal, the number "2" of oxygen atoms in the chemical structure formula of the lithium supplementing agent is not necessarily an integer 2, and the number of oxygen atoms may vary within an acceptable range for persons skilled in the art. The number of oxygen atoms in the crystal can be measured or calculated using methods known in the art. Similarly, the number of other atoms is not necessarily an integer.

In the lithium supplementing agent provided by this application, compared to a lithium supplementing agent with the number x of lithium atoms greater than 2, the preparation process is simple and the synthesis cost is relatively low, which helps reduce the costs of secondary batteries and also helps reduce residual alkaline substances (for example, lithium hydroxide) in the lithium supplementing agent (also known as "residual alkali"), improving the gelation phenomenon of a positive electrode slurry and reducing gas generation in the battery, thereby mitigating performance degradation of the cell due to gas generation from high-lithium lithium supplementing agents.

In some embodiments, the release performance of the lithium supplementing agent can be obtained by any method known in the art. In some embodiments, the release performance of the lithium supplementing agent is measured by a method described below.

The lithium supplementing agent, PVDF, and SP are mixed at a weight ratio of 8:1:1, and then the resulting mixture is added into a solvent N-methylpyrrolidone to form a slurry. After the slurry is well stirred to uniformity, the slurry is made into an electrode plate using a coating machine. The prepared electrode plate undergoes drying, cold pressing, and cutting to assemble a lithium half-cell. Testing is performed at a rate of 0.1C under 2.0-3.75 V and 25°C. A lithium intercalation/deintercalation capacity of each cycle is recorded. The obtained capacity is divided by the weight of the lithium supplementing agent to obtain a specific lithium intercalation/deintercalation capacity. A difference between the specific lithium deintercalation capacity and the specific lithium intercalation capacity of each cycle is calculated. The difference of each cycle is gradually increased with the number of cycles to obtain a limit lithium supplementation amount of the lithium supplementing agent during cycling.

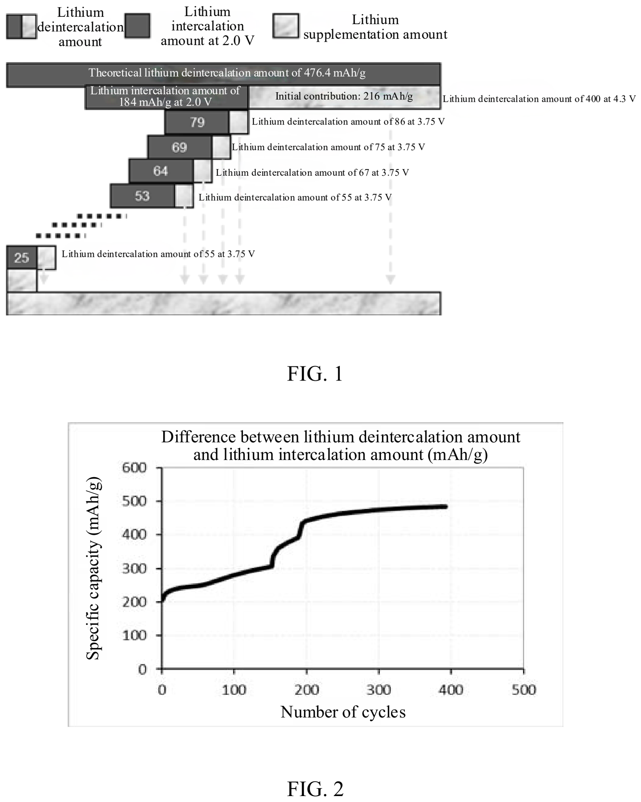

In this application, FIG. 1 is a theoretical schematic diagram of the lithium supplementing agent $Li_xNiO_2$ ($x = 1.8$), and FIG. 2 shows a variation curve of the number of cycles versus the specific capacity obtained by the release performance measurement method. It can be seen that the lithium supplementing agent continuously deintercalates active lithium during a plurality of cycles, indicating that the polycrystalline lithium supplementing agent added in this application can continuously release active lithium in a secondary battery. In some embodiments, the lithium supplementing agent of this application can provide a lithium deintercalation amount of not less than 400 mAh/g. In some embodiments, the lithium supplementing agent of this application can provide a lithium deintercalation amount of not less than 450 mAh/g, 455 mAh/g, 460 mAh/g, 465 mAh/g, 470 mAh/g, or 475 mAh/g.

Therefore, the polycrystalline lithium supplementing agent provided by this application can rapidly decay during the first charge, quickly releasing sufficient active lithium to compensate for the active lithium consumed on the negative electrode surface during the first charge-discharge cycle, improving the first charge-discharge capacity of the secondary battery and increasing the energy density of the battery. Additionally, the polycrystalline lithium supplementing agent slowly releases active lithium during cycling, significantly improving the cycling performance of the battery and mitigating degradation of the cell. The polycrystalline lithium supplementing agent may be a commercially available product or prepared by known or commonly used methods in the art.

In some embodiments, the volume-based median particle size $D_v50$ of the lithium supplementing agent is 2.5-12.5 $\mu$m. In some embodiments, the volume-based median particle size $D_v50$ of the lithium supplementing agent is 2.5-11.5 $\mu$m, 3-12 $\mu$m, 3.5-11.5 $\mu$m, 4-12 $\mu$m, 5-12 $\mu$m, 6-12 $\mu$m, 7-12 $\mu$m, 4-11 $\mu$m, 5-11 $\mu$m, 6-11 $\mu$m, 7-11 $\mu$m, 5-10 $\mu$m, 6-10 $\mu$m, or 7-10 $\mu$m. In some embodiments, the volume-based median particle size $D_v50$ of the lithium supplementing agent is 3.5-11.5 $\mu$m.

In this application, the term "$D_v50$" refers to a corresponding particle size when a cumulative volume distribution percentage in a test sample reaches 50%, which can also be understood as a median particle size. $D_v50$ can be measured by obtaining a particle size distribution of a test sample using equipment or instruments such as a laser particle size analyzer or an electron scanning microscope in accordance with industry operational requirements, and then statistically determining $D_v50$ of the test sample.

In this application, the test sample may be powder particles of the lithium supplementing agent or a positive electrode plate containing the lithium supplementing agent. For the lithium supplementing agent in powder form, its $D_v50$ value can be typically measured using, for example, a laser particle size analyzer. For the positive electrode plate, for example, the lithium supplementing agent in the active layer can be exposed, and its $D_v50$ value can be statistically determined using an electron scanning microscope with mapping. For example, a particle size of the lithium supplementing agent in the positive electrode plate can be measured by a method described below.

A $100 \times 100$ mm electrode plate sample is cut with a blade. A special tape is attached to a double-sided adhesive tape and rolled three times in the same direction using a pressure roller. The special tape is peeled off using a tensile machine to expose a first active layer containing the lithium supplementing agent. The material of the lithium supplementing agent is identified using an SEM (scanning electron microscope) with mapping (mapping) in accordance with industry testing standards. At least 50 lithium supplementing agent particles are measured, and calculation is performed using statistics to obtain the $D_v50$ value of the lithium supplementing agent in the electrode plate.

The volume-based median particle size $D_v50$ of the lithium supplementing agent within the range facilitates rapid release of active lithium, improving the kinetic performance and cycling performance (for example, a capacity retention rate) of the secondary battery. $D_v50$ of the lithium supplementing agent within an appropriate range helps control the lithium deintercalation amount and residual amount of the lithium supplementing agent during the first charge-discharge cycle, increasing a first-cycle specific capacity and allowing the positive electrode plate to achieve a balance between an initial specific capacity and a later-stage slow-release lithium amount. If the particle size of the lithium supplementing agent is too small, residual alkaline impurities (residual alkali) on the surface of the lithium supplementing agent increase sharply, easily causing gelation of the positive electrode slurry during preparation and increasing the risk of gas generation in the cell. If the particle size of the lithium supplementing agent is too large, the lithium release speed of the lithium supplementing agent is slowed down, thus affecting the kinetic performance of the cell and hindering improvements in energy density.

In some embodiments, the second active layer includes no lithium supplementing agent. In this case, since the first active layer containing the lithium supplementing agent is applied on a side close to the positive electrode current collector and is not in direct contact with the external processing environment or has a small contact area with the processing environment, direct contact between the lithium supplementing agent and moisture in the processing environment can be avoided or reduced, improving the stability of the lithium supplementing agent, and helping reduce safety hazards of the lithium supplementing agent and fully utilize the specific capacity of the lithium supplementing agent.

In some embodiments, based on a total mass of the first active layer and the second active layer of the positive electrode plate, a mass percentage of the lithium supplementing agent in the first active layer is not more than 5% and not less than 0.2%, optionally 0.1% to 5%, 0.5% to 5%, 1% to 5%, 1.5% to 5%, 2% to 5%, 2.5% to 5%, 0.1% to 4.5%, 0.5% to 4.5%, 1% to 4.5%, 0.1% to 4%, 0.5% to 4%, 0.8% to 4%, or 1% to 4%. In some embodiments, based on the total mass of the first active layer and the second active layer of the positive electrode plate, the mass percentage of the lithium supplementing agent is 0.2%, 0.4%, 0.6%, 0.8%, 1.2%, 1.4%, 1.6%, 1.8%, 2.2%, 2.7%, 3%, 3.3%, 3.5%, 3.7%, 4%, 4.2%, 4.4%, 4.6%, 4.8%, or 5%, or falls within a range defined by any two of these values. In some embodiments, based on the total mass of the first active layer and the second active layer of the positive electrode plate, the mass percentage of the lithium supplementing agent is 0.8% to 4%. The lithium supplementing agent within the range can provide sufficient active lithium, slowing down the degradation speed of the cell of the secondary battery, improving the cycling performance of the secondary battery, and reducing safety hazards caused by side reactions of the lithium supplementing agent.

In some embodiments, the ratio q of the mass of the first active layer to the total mass of the first active layer and the second active layer of the positive electrode plate is 10% to 70%, optionally 20% to 60%, 10% to 60%, or 20% to 70%. In some embodiments, the ratio q of the mass of the first active layer to the total mass of the first active layer and the second active layer of the positive electrode plate is 10%, 15%, 20%, 25%, 30%, 35%, 40%, 45%, 50%, 55%, 60%, 65%, or 70%, or falls within a range defined by any two of these values. In some embodiments, the ratio q of the mass of the first active layer to the total mass of the first active layer and the second active layer of the positive electrode plate is 20% to 60%. The ratio q within the range helps improve the capacity retention rate and the first-cycle specific capacity of the secondary battery, mitigating degradation of the secondary battery, improving the cycling capacity of the secondary battery, and increasing the energy density of the secondary battery.

In some embodiments, a mass percentage p/q of the lithium supplementing agent in the first active layer is not less than 0.5% and not more than 12%, optionally 2% to 10%, 6% to 10%, 6% to 12%, or 2% to 6%. In some embodiments, the mass percentage p/q of the lithium supplementing agent in the first active layer is 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, or 12%, or falls within a range defined by any two of these values. In some embodiments, the mass percentage p/q of the lithium supplementing agent in the first active layer is not less than 2% and not more than 10%. The mass percentage of the lithium supplementing agent within the range can improve the capacity retention rate or the first-cycle specific capacity of the secondary battery, improving the cycling capacity of the secondary battery, or increasing the energy density of the secondary battery.

In some embodiments, the positive electrode active material may include at least one of the following materials: lithium-containing phosphate with an olivine structure, lithium transition metal oxide, and respective modified compounds thereof.

In this context, modification of modified compounds may include one or more of doping modification and coating modification. These positive electrode active materials may be used alone or in combination of two or more.

Examples of lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ or $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also referred to as NCM333), $LiNi_{0.5}Co_{0.2}Mn_{0.3}O_2$ (also referred to as NCM523), $LiNi_{0.5}Co_{0.25}Mn_{0.25}O_2$ (also referred to as NCM211), $LiNi_{0.6}Co_{0.2}Mn_{0.2}O_2$ (also referred to as NCM622), $LiNi_{0.8}Co_{0.1}Mn_{0.1}O_2$ (also referred to as NCM811)), lithium nickel cobalt aluminum oxide (for example, $LiNi_{0.85}Co_{0.15}Al_{0.05}O_2$), and modified compounds thereof.

Lithium-containing phosphate with the olivine structure includes one or more of lithium iron phosphate and modified compounds thereof. The modified compounds of lithium iron phosphate may be obtained through, for example, partial substitution of Fe with metal elements other than Fe, such as Sc, V, Cr, Mn, Ti, Al, Co, Ni, Cu, Zn, where atomic radii of the metal elements are similar to the atomic radius of Fe. Examples of the modified compounds of lithium iron phosphate include $Li_zFe_{1-k}Me_kPO_4$, where Me is selected from one or more of Sc, V, Cr, Mn, Ti, Al, Co, Ni, Cu, and Zn, $0.8 \leq z \leq 1.3$, and $0 \leq k \leq 0.5$. Doping-modified lithium iron phosphate may include, for example, lithium manganese iron phosphate. Lithium iron phosphate and doping-modified compounds thereof may alternatively undergo coating modification, such as carbon coating. Examples of lithium-containing phosphate may include but are not limited to at least one of lithium iron phosphate (for example, $LiFePO_4$ (also referred to as LFP)), a composite of lithium iron phosphate and carbon, lithium manganese phosphate (for example, $LiMnPO_4$), a composite of lithium manganese phosphate and carbon, lithium manganese iron phosphate, and a composite of lithium manganese iron phosphate and carbon. In some embodiments, the positive electrode active material is selected from one or more of lithium iron phosphate and modified compounds thereof; optionally, the positive electrode active material includes $Li_zFe_{1-k}Me_kPO_4$ and coating modified compounds thereof, where Me is selected from one or more of Sc, V, Cr, Mn, Ti, Al, Co, Ni, Cu, and Zn, $0.8 \leq z \leq 1.3$, and $0 \leq k \leq 0.7$.

The positive electrode active material has high thermal stability, helping the battery to achieve higher high-temperature safety performance and allowing the battery to have both a longer high-temperature cycle life and higher high-temperature storage performance.

This application further provides a lithium secondary battery prepared using the above positive electrode plate and an application of the lithium secondary battery. The lithium secondary battery provided by this application has good cycling performance, particularly good high-temperature cycling performance. Compared to secondary batteries without the lithium supplementing agent, the battery degradation is significantly mitigated. Additionally, the secondary battery reduces the loss of active lithium during the first charge-discharge cycle and has improved energy density.

In some embodiments, a cycling voltage window of the lithium secondary battery prepared using the above positive electrode plate is 2.0-4.1 V, and an exemplary secondary battery includes a secondary battery with a positive electrode active material being lithium manganese iron phosphate. In some embodiments, the cycling voltage window of the lithium secondary battery prepared using the above positive electrode plate is 2.0-3.8 V, optionally 2.0-3.65 V, and an exemplary secondary battery includes a secondary battery with a positive electrode active material being lithium iron phosphate.

In this application, the "cycling battery window" refers to an operating voltage range of the secondary battery. If the upper limit of the operating voltage is too low, the lithium supplementing agent in the positive electrode plate cannot be released, which leads to a low initial capacity. If the upper limit of the operating voltage is too high, the lithium supplementing agent is released rapidly, which helps increase the initial capacity, but cannot achieve a slow and sustained release effect and does not help mitigate the degradation of the secondary battery. The cycling battery window within the range allows the lithium supplementing agent to release active lithium at the initial stage of cycling without releasing all active lithium inside, thereby improving the initial capacity of the secondary battery. Additionally, the lithium supplementing agent slowly releases active lithium inside during cycling, slowing down the degradation speed of the secondary battery.

In some embodiments, an upper limit voltage of a cycling voltage of the lithium secondary battery is 3.6-3.8 V. In some embodiments, the upper limit voltage of the cycling voltage of the lithium secondary battery is 3.65-3.8 V, 3.7-3.8 V, 3.6-3.7 V, 3.7-3.8 V, or 3.65-3.7 V, and an exemplary secondary battery may be a secondary battery with a positive electrode active material being lithium iron phosphate.

The voltage window in the range can avoid rapid release of the lithium supplementing agent during the first cycle, improve the sustained release effect of the lithium supplementing agent, and help avoid high-voltage decomposition of the electrolyte, thereby enhancing the stability of the electrolyte of the secondary battery and prolonging the cycle life of the secondary battery.

In the lithium secondary battery provided by this application, the positive electrode current collector serves as a carrier for a positive electrode coating layer, which can not only support the positive electrode active material but also collect and output the current generated by the positive electrode active material.

As an example, the positive electrode current collector has two opposite surfaces in its thickness direction, and a positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofiber.

In some embodiments, the positive electrode plate can be prepared by the following method: the components used for preparing the positive electrode plate, such as the positive electrode active material, conductive agent, binder, and any other components are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

The lithium secondary battery includes a negative electrode plate, where the negative electrode plate includes a negative electrode current collector and a negative electrode film layer disposed on at least one surface of the negative electrode current collector, and the negative electrode film layer includes a negative electrode active material.

As an example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, or silver alloy) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. As an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, and a tin alloy. However, this application is not limited to these materials, and other conventional materials that can be used as negative electrode active materials for batteries may be used instead. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate can be prepared by the following method: the components used for preparing the negative electrode plate, such as the negative electrode active material, conductive agent, binder, and any other components are dispersed in a solvent (for example, deionized water) to form a negative electrode slurry;

and the negative electrode slurry is applied on the negative electrode current collector, followed by processes such as drying and cold pressing, to obtain the negative electrode plate.

The lithium secondary battery includes an electrolyte, where the electrolyte conducts ions between the positive electrode plate and the negative electrode plate. The type of the electrolyte is not specifically limited in this application and can be selected according to needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive, where the additive may include a negative electrode film-forming additive and a positive electrode film-forming additive, and may further include an additive capable of improving some performance of a battery, for example, an additive for improving overcharge performance of the battery, or an additive for improving high-temperature performance or low-temperature performance of the battery.

In some embodiments, the secondary battery further includes a separator. The type of the separator is not particularly limited in this application, and any well-known porous separator with good chemical and mechanical stability can be used.

In some embodiments, the material of the separator may be selected from at least one of glass fiber, non-woven fabric, polyethylene, polypropylene, and polyvinylidene fluoride. The separator may be a single-layer film or a multilayer composite film, which is not particularly limited. When the separator is a multilayer composite film, materials of layers may be the same or different, which is not particularly limited.

In some embodiments, the positive electrode plate, the negative electrode plate, and the separator can be made into an electrode assembly through a winding or lamination process.

In some embodiments, the secondary battery may include an outer package. The outer package can be used to encapsulate the electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

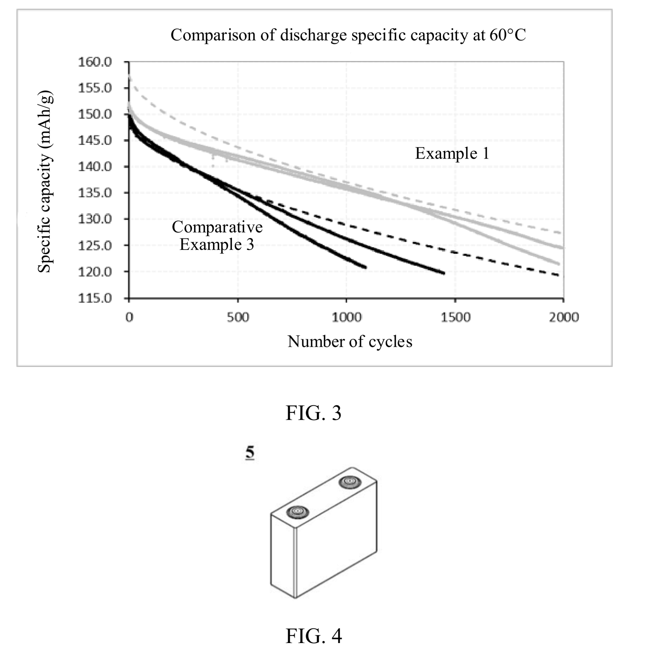

The shape of the secondary battery is not particularly limited in this application. The secondary battery may be cylindrical, rectangular, or of any other shapes. For example, FIG. 4 shows a secondary battery 5 with a rectangular structure as an example.

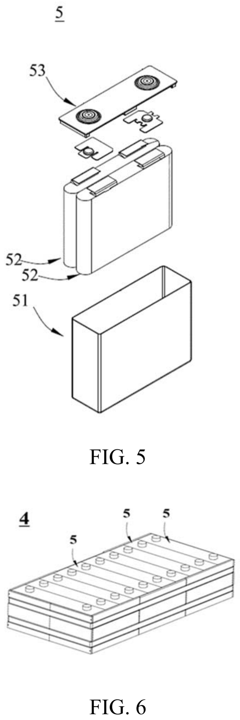

In some embodiments, referring to FIG. 5, the outer package may include a housing 51 and a cover plate 53. The housing 51 may include a base plate and side plates connected to the base plate, with the base plate and side plates enclosing an accommodating cavity. The housing 51 has an opening communicating with the accommodating cavity, and the cover plate 53 can cover the opening to seal the accommodating cavity. The positive electrode plate, negative electrode plate, and separator can be formed into an electrode assembly 52 through a winding or lamination process. The electrode assembly 52 is packaged in the accommodating cavity. The electrolyte infiltrates the electrode assembly 52. One or more electrode assemblies 52 may be contained in the secondary battery 5, and persons skilled in the art may make choices according to actual needs.

In some embodiments, the secondary battery can be assembled into a battery module. The battery module may include one or more secondary batteries. The specific quantity can be chosen by persons skilled in the art according to the application and capacity of the battery module.

FIG. 6 shows a battery module 4 as an example. Referring to FIG. 6, in the battery module 4, a plurality of secondary batteries 5 may be arranged sequentially along a length direction of the battery module 4. Certainly, the secondary batteries may alternatively be arranged in any other manners. Further, the plurality of secondary batteries 5 can be fixed by fasteners.

Optionally, the battery module 4 may further include an enclosure with an accommodating space, and the plurality of secondary batteries 5 are accommodated in the accommodating space.

In some embodiments, the above battery module may be further assembled into a battery pack. The battery pack may include one or more battery modules. The specific quantity can be chosen by persons skilled in the art according to the application and capacity of the battery pack.

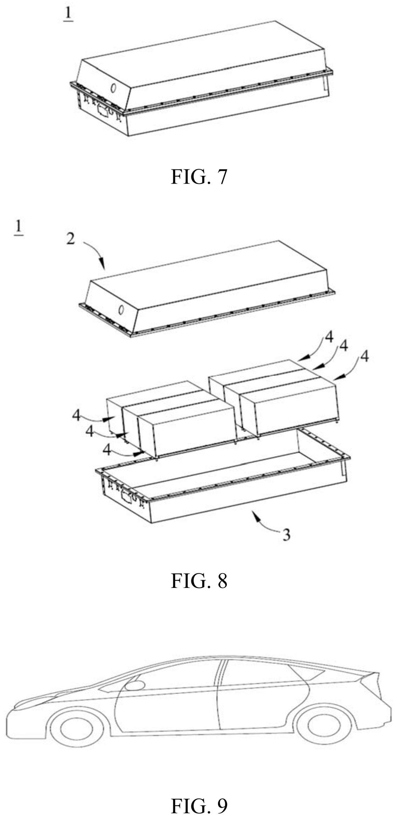

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box body 2 and a lower box body 3, where the upper box body 2 fits the lower box body 3 to form a sealed space for accommodating the battery modules 4. The plurality of battery modules 4 may be arranged in the battery box in any manner.

Additionally, this application further provides an electric apparatus. The electric apparatus includes at least one of the secondary battery, battery module, or battery pack provided by this application. The secondary battery, battery module, or battery pack can be used as a power source for the electric apparatus or as an energy storage unit for the electric apparatus. The electric apparatus may include a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, a ship, a satellite, an energy storage system, and the like, but is not limited thereto.

The secondary battery, the battery module, or the battery pack can be selected for the electric apparatus based on the requirements for using the electric apparatus.

FIG. 9 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

As another example, the apparatus may be a mobile phone, a tablet computer, a laptop computer, or the like. Such apparatus is generally required to be light and thin and may use a secondary battery as its power source.

## EXAMPLES

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

## I. Preparation method

Example 1

(1) Preparation of positive electrode plate

Preparation of first active layer:

A positive electrode active material lithium iron phosphate (purchased from Dynanonic, DF-5), a lithium supplementing agent $Li_{1.8}NiO_2$, a conductive agent acetylene black, and a binder PVDF (polyvinylidene fluoride) were mixed at a weight ratio of 91:6:0.7:2.3. A solvent N-methylpyrrolidone was added, and the resulting mixture was well stirred to uniformity to obtain a positive electrode slurry with good fluidity and low tendency to gel. The positive electrode slurry was applied on one side of a current collector aluminum foil.

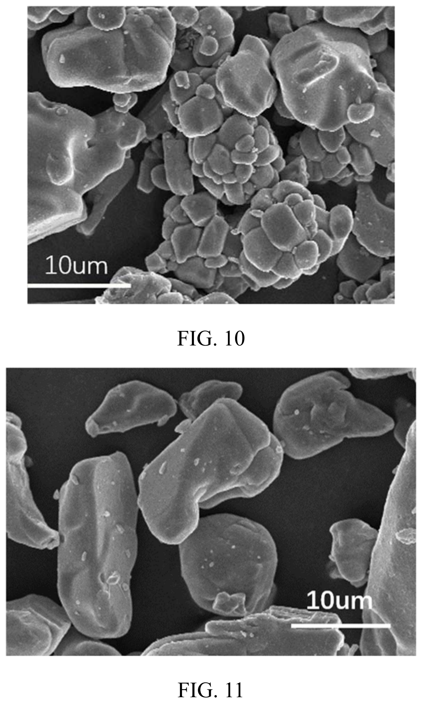

The lithium supplementing agent was prepared by a method including the following steps:
Lithium hydroxide (with a volume-based median particle size $D_v50$ of 6-7 $\mu m$) and a nickel hydroxide precursor (with a volume-based median particle size $D_v50$ of 8-10 $\mu m$) at a molar ratio of 1.02x:1 were mixed in a ball mill under a nitrogen atmosphere. The mixed material was transferred to a crucible and calcined at 790°C to 850°C for 10-12 h under a nitrogen atmosphere at a heating speed of 4°C/min. The material was cooled to obtain a sintered material. The sintered material was crushed and sieved under a nitrogen atmosphere to obtain a lithium supplementing agent $Li_xNiO_2$ (1 < x < 2) with a volume-based median particle size $D_v50$ of 8.2 $\mu m$ (measured according to GB/T 19077-2016 Particle Size Distribution Laser Diffraction Method). A value of x was determined by a method described under "Determination of Metal Elements in Lithium Supplementing Agent" in the performance testing section. FIG. 10 shows a scanning electron microscope image of the lithium supplementing agent, which exhibited significant agglomeration, where secondary particles were formed by agglomeration of a plurality of primary particles. The prepared lithium supplementing agent was in a polycrystalline form.

Preparation of second active layer:

A positive electrode active material lithium iron phosphate, a conductive agent acetylene black, and a binder PVDF were mixed at a weight ratio of 98:0.7:1.3. A solvent N-methylpyrrolidone was added, and the mixture was well stirred to uniformity to obtain a positive electrode slurry. The positive electrode slurry was applied on a side of the first active layer away from a current collector.

The current collector coated with the first active layer and the second active layer was dried at 85°C and then cold-pressed. The current collector was then dried under vacuum at 85°C for 4 h. After trimming, cutting, and slitting were performed, a positive electrode plate was obtained. A ratio q of a mass of the first active layer to a total mass of the first active layer and the second active layer was 40%, and a ratio p of a mass of the lithium supplementing agent in the first active layer to the total mass of the first active layer and the second active layer was 2.4%.

(2) Preparation of negative electrode plate

A negative electrode active material graphite, a conductive agent Super P, a thickener sodium carboxymethyl cellulose (CMC-Na), and a binder styrene-butadiene rubber (SBR) were well mixed in deionized water to prepare a negative electrode slurry with a solid content of 30wt%. A mass ratio of graphite, Super P, CMC-Na, and SBR was 80:15:3:2. The negative electrode slurry was applied on a current collector copper foil and dried at 85°C. After cold pressing, trimming, cutting, and slitting, drying was performed under vacuum at 120°C for 12 h to obtain a negative electrode plate.

(3) Separator

A polyethylene film (PE) with a thickness of 16 $\mu$m was used as the separator.

(4) Preparation of electrolyte

In an argon atmosphere glove box ($H_2O$ content < 0.1 ppm, $O_2$ content < 0.1 ppm), ethylene carbonate (EC) and dimethyl carbonate (DMC) were well mixed at a ratio of 3:7 to obtain a mixed solvent. Lithium hexafluorophosphate ($LiPF_6$) at a molar concentration of 1 mol/L was then dissolved in the mixed solvent and stirred to uniformity to obtain an electrolyte.

(5) Preparation of battery

The positive electrode plate, the separator, and the negative electrode plate were stacked in sequence, where the separator is located between the positive and negative electrode plates to separate the positive and negative electrode plates. The resulting stack was wound to obtain a jelly roll. Tabs were welded, and the jelly roll was placed in an outer package. The prepared electrolyte was injected into the dried jelly roll, followed by packaging, standing, formation, shaping, and capacity testing to obtain a lithium secondary battery product of Example 1.

The preparation methods of the secondary batteries of Examples 2 to 15 were similar to the preparation method of the secondary battery of Example 1, but composition and product parameters of the electrode plates of the batteries were adjusted, with details shown in Table 1. In the preparation method of the lithium supplementing agent of Example 6, the volume-based median particle size $D_v50$ of lithium hydroxide was 2-3 $\mu$m, the volume-based median particle size $D_v50$ of the nickel hydroxide precursor was 5-6 $\mu$m, and the heating speed during calcination was 5°C/min. In Example 7, the volume-based median particle size $D_v50$ of lithium hydroxide was 2-3 $\mu$m, the volume-based median particle size $D_v50$ of the nickel hydroxide precursor was 6-8 $\mu$m, and the heating speed during calcination was 5°C/min. In Example 8, the volume-based median particle size $D_v50$ of lithium hydroxide was 8-9 $\mu$m, the volume-based median particle size $D_v50$ of the nickel hydroxide precursor was 11-12 $\mu$m, and the heating speed during calcination was 3°C/min. In Example 9, the volume-based median particle size $D_v50$ of lithium hydroxide was 8-9 $\mu$m, the volume-based median particle size $D_v50$ of the nickel hydroxide precursor was 12-13 $\mu$m, and the heating speed during calcination was 3°C/min.

The preparation method of the secondary battery of Example 16 was similar to the preparation method of the secondary battery of Example 1, but the positive electrode active material of the electrode plate was adjusted, where the positive electrode active materials in the first active layer and the second active layer were each $LiFe_{0.4}Mn_{0.6}PO_4$.

The preparation methods of the secondary batteries of Examples 17 to 19 were similar to of the preparation methods of the secondary batteries of Examples 1, 15, and 14, respectively, except that the preparation raw material for the lithium supplementing agent was changed from a nickel hydroxide precursor to a manganese hydroxide precursor.

The preparation methods of the secondary batteries of Examples 20 and 21 were similar to the preparation method of the secondary battery of Example 1, except that a lithium supplementing agent NCM523 (purchased from Ronbay New Energy Technology Co., Ltd., S700) was used in Example 20, and a lithium supplementing agent NCM811 (purchased from Ronbay New Energy Technology Co., Ltd., S700) was used in Example 21.

The preparation method of the secondary battery of Example 22 was similar to the preparation method of the secondary battery of Example 1, but the preparation raw material for the lithium supplementing agent was adjusted, where a nickel hydroxide precursor (with a volume-based median particle size $D_v50$ of 8-10 $\mu$m) and a copper hydroxide precursor (with a volume-based median particle size $D_v50$ of 20-30 $\mu$m) at a Ni:Cu molar ratio of 99:1.02 were added.

The preparation method of the secondary battery of Example 23 was similar to the preparation method of the secondary battery of Example 15, but the preparation raw material for the lithium supplementing agent was adjusted, where a nickel hydroxide precursor and a copper hydroxide precursor (with a volume-based median particle size $D_v50$ of 20-30 $\mu$m) at a Ni:Cu molar ratio of 99:1.02 were used.

The preparation method of the secondary battery of Example 24 was similar to the preparation method of the secondary battery of Example 14, but the preparation raw material for the lithium supplementing agent was adjusted, where a nickel hydroxide precursor (with a volume-based median particle size $D_v50$ of 8-10 $\mu$m) and a copper hydroxide precursor (with a volume-based median particle size $D_v50$ of 20-30 $\mu$m) at a Ni:Cu molar ratio of 99:1.02 were used.

The preparation method of the secondary battery of Example 25 was similar to the preparation method of the secondary battery of Example 22, but the preparation raw material for the lithium supplementing agent was adjusted, where a nickel hydroxide precursor (with a volume-based median particle size $D_v50$ of 8-10 $\mu$m) and an aluminum hydroxide precursor (with a volume-based median particle size $D_v50$ of 20-30 $\mu$m) at a Ni:Al molar ratio of 999:1.02 were used.

The preparation method of the secondary battery of Example 26 was similar to the preparation method of the secondary battery of Example 22, but the preparation raw material for the lithium supplementing agent was adjusted, where a nickel hydroxide precursor (with a volume-based median particle size $D_v50$ of 8-10 $\mu$m) and a manganese hydroxide precursor (with a volume-based median particle size $D_v50$ of 20-30 $\mu$m) at a Ni:Mn molar ratio of 995:5.1 were used.

In the secondary battery of Comparative Example 1, commercially available $LiPO_4$ was used as the lithium supplementing agent, and the preparation process of the secondary battery was similar to that of Example 1.

The secondary battery of Comparative Example 2 was substantially similar to that of Example 1, where the lithium supplementing agent was prepared by the following method:

Lithium hydroxide (with a volume-based median particle size $D_v50$ of 6-7 $\mu$m) and a nickel hydroxide precursor (with a volume-based median particle size $D_v50$ of 8-10 $\mu$m) at a molar ratio of 1.08x:1 were mixed in a ball mill under a nitrogen atmosphere. The mixed material was transferred to a crucible and calcined at 900°C to 950°C for 10-12 h under a nitrogen atmosphere at a heating speed of 4°C/min. The material was cooled to obtain a sintered material. The sintered material was crushed and sieved under a nitrogen atmosphere to obtain a lithium supplementing agent $Li_xNiO_2$ ($1 < x < 2$) with a volume-based median particle size $D_v50$ of approximately 8.2 $\mu$m (measured according to GB/T 19077-2016 Particle Size Distribution Laser Diffraction Method). As shown in FIG. 11, the lithium supplementing agent was observed as dispersed primary particle crystals under a scanning electron microscope, exhibiting a single-crystal form.

The preparation method of the secondary battery of Comparative Example 3 was similar to the preparation method of the secondary battery of Example 1, but no lithium supplementing agent was added. The first active layer was prepared by mixing a positive electrode active material lithium iron phosphate, a conductive agent acetylene black, and a binder PVDF (polyvinylidene fluoride) at a weight ratio of 97:0.7:2.3.

The preparation method of the secondary battery of Comparative Example 4 was similar to the preparation method of the secondary battery of Comparative Example 3, but the positive electrode active material was $LiFe_{0.4}Mn_{0.6}PO_4$.

## II. Performance test

1. Capacity retention rate test

In a 60°C constant-temperature environment, after left standing for 2 h, the prepared secondary battery was charged to 3.65 V at a constant current of 0.5C, and then charged at a constant voltage of 3.65 V until the current dropped to 0.05C. After left standing for 10 min, the battery was discharged to 2.0 V at a constant current of 1C, left standing for 5 min, and then discharged to 2.0 V at 0.05C. This was the first charge/discharge cycle of the battery, and a discharge capacity at this cycle was recorded as a first-cycle discharge capacity (C0) of the battery. The above steps were repeated on the same battery, and after 800 cycles, a process capacity (C1) of the battery was recorded. The capacity retention rate after 800 cycles was equal to C1/C0 × 100%. The testing processes for Comparative Examples and other Examples were the same as the above process. A ratio (improvement rate of capacity retention rate) of capacity retention rate improvements of Examples 1 to 15 and Comparative Examples 1 and 2 relative to Comparative Example 3 was calculated.

2. Test for first-cycle specific capacity of secondary battery

For a positive electrode active material being lithium iron phosphate: In a 60°C constant-temperature environment, after left standing for 2 h, the prepared secondary battery was charged to 3.65 V at a constant current of 0.5C, then charged at a constant voltage of 3.65 V until the current dropped to 0.05 C. After left standing for 10 min, the battery was discharged to 2.0 V at a constant current of 1C, left standing for 5 min, and then discharged to 2.0 V at 0.05C. This was the first charge/discharge cycle of the battery, and a discharge capacity at this cycle was recorded as a first-cycle discharge capacity (C0) of the battery. A specific capacity was a ratio (mAh/g) of C0 to a total mass of the positive electrode active material and the lithium supplementing agent. A ratio (improvement rate of first-cycle specific capacity) of first-cycle specific capacity improvements of Examples 1 to 15 and Comparative Examples 1 and 2 relative to Comparative Example 3 was calculated.

For a positive electrode active material being lithium manganese iron phosphate: In a 60°C constant-temperature environment, after left standing for 2 h, the prepared secondary battery was charged to 4.1 V at a constant current of 0.5C, then charged at a constant voltage of 4.1 V until the current dropped to 0.05C. After left standing for 10 min, the battery was discharged to 2.0 V at a constant current of 1C, left standing for 5 min, and then discharged to 2.0 V at 0.05C. This was the first charge/discharge cycle of the battery, and a discharge capacity at this cycle was recorded as a first-cycle discharge capacity (C0) of the battery. A specific capacity was a ratio (mAh/g) of C0 to a total mass of the positive electrode active material and the lithium supplementing agent. A ratio (improvement rate of first-cycle specific capacity) of first-cycle specific capacity improvement of Example 16 relative to Comparative Example 4 was calculated.

3. Gas generation performance test

The battery prepared in each example was assembled into a hard-shell secondary battery. A gas generation nail was welded at an electrolyte injection hole of a prepared hard-shell cell. Then, a Teflon tube was filled with oil, and the oil-filled Teflon tube was connected to the gas generation nail of the cell. A pressure gauge was used, filled with oil, and connected to the other end of the Teflon tube to complete the preparation of the cell with a pressure gauge, and the cell was left standing for 24 h. The prepared gas-generating cell was cycled for 200 cycles according to the method described in "1. Capacity retention rate test". The pressure gauge was used to record readings of the pressure gauge in real-time online with the number of cycles. A ratio (improvement rate of gas generation amount) of the gas generation amount improvements of Examples 1 to 15 and 17 to 26 and Comparative Examples 1 and 2 relative to Comparative Example 3 was calculated, and a ratio of gas generation amount improvement of Example 16 relative to Comparative Example 4 was calculated.

4. Morphology test of lithium supplementing agent

The lithium supplementing agent was tested using a ZEISS sigma 300 scanning electron microscope, and a sample morphology was observed according to standard JY/T010-1996.

5. Determination of metal elements in lithium supplementing agent

An inductively coupled plasma emission spectrometer was used, and an EPA test method 6010D-2014 was used. A test sample was weighed, digestion reagents and aqua regia were added, and the sample was completely digested at a temperature not exceeding 200°C using a flat-plate digestion method. A digestion solvent was tested through an excitation light source, and the element content in the sample was measured based on the characteristics and emission intensity of different emission spectral lines. The element content (mass fraction w/w%) was equal to element mass/sample weight to determine proportions of metal elements in the sample.

**III. Analysis of test results of examples and comparative examples**

Batteries in examples and comparative examples were prepared according to the foregoing methods, and performance parameters were measured. Results are shown in Table 1.

**Table 1: Test results of Examples 1 to 26 and Comparative Examples 1 and 2**

| Number | First active layer | | | Positive electrode plate | | Secondary battery | | |
|---|---|---|---|---|---|---|---|---|
| | Lithium supplementing agent | Percentage of lithium supplementing agent (%) | $D_v50$ of lithium supplementing agent ($\mu$m) | q (%) | P (%) | Improvement rate of capacity retention rate | Improvement rate of first-cycle specific capacity | Improvement rate of gas generation amount |
| Example 1 | $Li_{1.8}NiO_2$ | 6 | 8.2 | 40 | 2.4 | 4.85% | 1.00% | 10% |
| Example 2 | $Li_{1.8}NiO_2$ | 0.5 | 8.2 | 40 | 0.2 | -0.01% | 0.31% | 2% |
| Example 3 | $Li_{1.8}NiO_2$ | 2 | 8.2 | 40 | 0.8 | 1.67% | 0.25% | 7% |
| Example 4 | $Li_{1.8}NiO_2$ | 10 | 8.2 | 40 | 4 | 7.81% | 1.04% | 13% |
| Example 5 | $Li_{1.8}NiO_2$ | 12 | 8.2 | 40 | 4.8 | 3.82% | -2.69% | 17% |
| Example 6 | $Li_{1.8}NiO_2$ | 6 | 2.5 | 40 | 2.4 | 2.73% | 1.14% | 20% |
| Example 7 | $Li_{1.8}NiO_2$ | 6 | 3.5 | 40 | 2.4 | 3.75% | 1.02% | 12% |
| Example 8 | $Li_{1.8}NiO_2$ | 6 | 11.2 | 40 | 2.4 | 4.02% | 0.32% | 8% |
| Example 9 | $Li_{1.8}NiO_2$ | 6 | 12.5 | 40 | 2.4 | 3.51% | -0.11% | 13% |
| Example 10 | $Li_{1.8}NiO_2$ | 6 | 8.2 | 10 | 0.6 | 1.07% | -0.54% | 5% |
| Example 11 | $Li_{1.8}NiO_2$ | 6 | 8.2 | 20 | 1.2 | 2.06% | 0.07% | 9% |
| Example 12 | $Li_{1.8}NiO_2$ | 6 | 8.2 | 60 | 3.6 | 5.94% | 1.66% | 11% |
| Example 13 | $Li_{1.8}NiO_2$ | 6 | 8.2 | 70 | 4.2 | 5.89% | 2.03% | 16% |
| Example 14 | $Li_{1.1}NiO_2$ | 6 | 8.2 | 40 | 2.4 | 1.93% | 0.08% | 7% |
| Example 15 | $Li_{1.5}NiO_2$ | 6 | 8.2 | 40 | 2.4 | 3.42% | 0.50% | 8% |
| Example 16 | $Li_{1.8}NiO_2$ | 6 | 8.2 | 40 | 2.4 | 2.61% | 3.82% | 3% |
| Example 17 | $Li_{1.8}MnO_2$ | 6 | 8.2 | 40 | 2.4 | 5.03% | 0.73% | 16% |
| Example 18 | $Li_{1.5}MnO_2$ | 6 | 8.2 | 40 | 2.4 | 5.15% | 0.23% | 14% |
| Example 19 | $Li_{1.1}MnO_2$ | 6 | 8.2 | 40 | 2.4 | 5.32% | -0.19% | 12% |
| Example 20 | NCM523 | 6 | 4.0 | 40 | 2.4 | 1.72% | -1.81% | 1% |
| Example 21 | NCM811 | 6 | 4.0 | 40 | 2.4 | 1.69% | -0.73% | 3% |
| Example 22 | $Li_{1.8}Ni_{0.99}Cu_{0.01}O_2$ | 6 | 4.0 | 40 | 2.4 | 4.52% | 1.00% | 8% |

(continued)

| Number | First active layer | | | Positive electrode plate | | Secondary battery | | |
|---|---|---|---|---|---|---|---|---|
| | Lithium supplementing agent | Percentage of lithium supplementing agent (%) | $D_v50$ of lithium supplementing agent ($\mu$m) | q (%) | P (%) | Improvement rate of capacity retention rate | Improvement rate of first-cycle specific capacity | Improvement rate of gas generation amount |
| Example 23 | $Li_{1.5}Ni_{0.99}Cu_{0.01}O_2$ | 6 | 4.0 | 40 | 2.4 | 3.00% | 0.50% | 6% |
| Example 24 | $Li_{1.1}Ni_{0.99}Cu_{0.01}O_2$ | 6 | 4.0 | 40 | 2.4 | 1.66% | 0.08% | 4% |
| Example 25 | $Li_{1.8}Ni_{0.999}Al_{0.001}O_2$ | 6 | 4.0 | 40 | 2.4 | 4.44% | 1.24% | 10% |
| Example 26 | $Li_{1.8}Ni_{0.995}Mn_{0.005}O_2$ | 6 | 4.0 | 40 | 2.4 | 4.60% | 1.00% | 5% |
| Comparative Example 1 | $LiPO_4$ | 6 | 3.5 | 40 | 2.4 | -1.06% | -2.49% | 60% |
| Comparative Example 2 | Single-crystal $Li_{1.8}NiO_2$ | 6 | 8.2 | 40 | 2.4 | 3.27% | -0.09% | 8% |

EP 4 738 459 A1

According to the above results, Examples 1 to 26 all achieve good effects. Compared to Comparative Example 3 or 4 without the lithium supplementing agent, the addition of the lithium supplementing agent significantly improves the capacity retention rate of the secondary battery, indicating a significant reduction in the degradation speed of the cell of the secondary battery during cycling. Alternatively, the first-cycle specific capacity is increased, improving the cycling performance and energy density of the secondary battery. The secondary batteries prepared in Examples 1 to 26 exhibit good high-temperature cycling performance. As shown in FIG. 3, the absolute capacity slope of the secondary battery with the lithium supplementing agent is slower, indicating that the cell degradation of the secondary battery prepared in Example 1 during cycling is significantly mitigated.

From Examples 1 to 5, it can be seen that compared to Comparative Example 3, a mass percentage of the lithium supplementing agent in the first active layer being within a range of 0.5% to 12% can increase the capacity retention rate or the first-cycle specific capacity of the secondary battery. When the mass percentage of the lithium supplementing agent in the first active layer is within a range of 2% to 10%, both the capacity retention rate and the first-cycle specific capacity of the secondary battery can be improved.

From Examples 1 to 5, it can also be seen that when a mass percentage of the lithium supplementing agent in a solid material of the positive electrode plate (excluding the current collector) is 0.2% to 4.8%, the capacity retention rate or the first-cycle specific capacity of the secondary battery can be increased. When the mass percentage of the lithium supplementing agent in the solid material of the positive electrode plate (excluding the current collector) is 0.8% to 4%, both the capacity retention rate and the first-cycle specific capacity of the secondary battery can be improved.

From Examples 6 to 9, it can be seen that the particle size $D_v50$ of the lithium supplementing agent being within a range of 2.5-12.5 $\mu$m helps increase the capacity retention rate or the first-cycle specific capacity of the secondary battery. When the particle size $D_v50$ of the lithium supplementing agent is within a range of 2.5-11.2 $\mu$m, both the capacity retention rate and the first-cycle specific capacity of the secondary battery can be improved. However, the secondary battery prepared from a lithium supplementing agent with $D_v50$ of 2.5 $\mu$m has a significant increase in gas generation amount, resulting in degraded gas generation performance. The particle size $D_v50$ of the lithium supplementing agent being within a range of 3.5-11.2 $\mu$m allows the secondary battery to have both improved capacity retention rate and first-cycle specific capacity as well as good gas generation performance.

From Examples 10 to 13, it can be seen that when the mass percentage of the first active layer in the solid material of the positive electrode plate (excluding the current collector) is 10% to 70%, the capacity retention rate or the first-cycle specific capacity of the secondary battery can be increased. When the mass percentage of the first active layer in the solid material of the positive electrode plate (excluding the current collector) is 20% to 70%, both the capacity retention rate and the first-cycle specific capacity of the secondary battery can be improved. When the mass percentage of the first active layer in the solid material of the positive electrode plate (excluding the current collector) is 20% to 60%, both the capacity retention rate and the first-cycle specific capacity of the secondary battery can be improved, and the secondary battery has good gas generation performance.

From Examples 1, 14, and 15, it can be seen that polycrystalline $Li_{1.1}NiO_2$, $Li_{1.5}NiO_2$, and $Li_{1.8}NiO_2$ may each serve as the lithium supplementing agent for the lithium secondary battery, improving the capacity retention rate or the first-cycle specific capacity of the secondary battery. Compared to Comparative Example 1, $Li_{1.1}NiO_2$, $Li_{1.5}NiO_2$, and $Li_{1.8}NiO_2$ not only improve the capacity retention rate and the first-cycle specific capacity of the secondary battery but also exhibit excellent gas generation performance, indicating that the secondary battery prepared from the lithium supplementing agent has good storage performance.

From Examples 1 and 16, it can be seen that the solution with the addition of the lithium supplementing agent in this application can be applied to a secondary battery with a positive electrode active material being lithium manganese iron phosphate, improving both the capacity retention rate and the first-cycle specific capacity of the secondary battery. Additionally, the gas generation performance is also significantly improved. The comparison of Example 1 and Comparative Example 2 shows that single-crystal $Li_{1.8}NiO_2$ has a more stable crystal state, with a relatively lower speed of lattice destruction and decay during cycling than polycrystalline $Li_{1.8}NiO_2$, resulting in little or no effect on increasing the first-cycle specific capacity. Additionally, during subsequent cycles, the active lithium release always remains slow, ultimately leading to a significantly lower improvement in the capacity retention rate of the secondary battery than polycrystalline $Li_{1.8}NiO_2$. Polycrystalline $Li_{1.8}NiO_2$ is more conducive to improving the cycling performance of the secondary battery.

From Examples 17 to 19, it can be seen that polycrystalline $Li_{1.1}MnO_2$, $Li_{1.5}MnO_2$, and $Li_{1.8}MnO_2$ may each serve as the lithium supplementing agents for the lithium secondary battery, significantly increasing the capacity retention rate and significantly mitigating degradation of the secondary battery. $Li_{1.5}MnO_2$ and $Li_{1.8}MnO_2$ can improve both the first-cycle specific capacity and cycling capacity retention rate of the secondary battery, increasing energy density of the secondary battery while mitigating degradation.

From Examples 20 and 21, it can be seen that ternary lithium supplementing agents NCM523 and NCM811 can significantly increase the capacity retention rate, helping mitigate degradation of the secondary battery. Additionally, NCM523 and NCM811 each have a low improvement rate of gas generation amount, exhibiting excellent gas generation performance and helping prolong the storage life of the secondary battery.

From Examples 22 to 26, it can be seen that a lithium nickelate-based lithium supplementing agent doped with Cu, Al, or Mn can significantly increase the capacity retention rate, significantly mitigating degradation of the secondary battery. Additionally, the first-cycle specific capacity and cycling capacity retention rate of the secondary battery can also be improved, increasing energy density of the secondary battery while mitigating degradation. Furthermore, doping treatment also helps reduce the gas generation rate of the secondary battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. Additionally, without departing from the essence of this application, various modifications made to the embodiments that can be conceived by persons skilled in the art, and other manners constructed by combining some of the constituent elements in the embodiments are also included in the scope of this application.

**Claims**

1. A positive electrode plate, wherein the positive electrode plate comprises a first active layer applied on at least one side of a positive electrode current collector and containing a positive electrode active material and a polycrystalline lithium supplementing agent, and a second active layer applied on a side of the first active layer away from the current collector and containing a positive electrode active material; wherein

   the lithium supplementing agent comprises at least one of $Li_xNi_{1-y}M_yO_2$, $Li_xRO_2$, and $LiNi_\alpha Co_\beta Mn_\gamma O_2$, wherein M comprises one or more of Cu, Al, and Mn, and R comprises one of Ni and Mn; and

$$1 < x < 2, 0 < y \leq 0.01, \alpha + \beta + \gamma = 1, \text{ and } \alpha \geq 0.5.$$

2. The positive electrode plate according to claim 1, wherein the lithium supplementing agent comprises one or more of $Li_xNiO_2$, $Li_xMnO_2$, $Li_xNi_{1-y}M_yO_2$, and $LiNi_\alpha Co_\beta Mn_\gamma O_2$, wherein M comprises one or more of Cu, Al, and Mn, and R comprises one of Ni and Mn; and

$$1.1 < x < 1.8, 0 < y \leq 0.01, \alpha + \beta + \gamma = 1, \alpha \geq 0.5, 0 < \beta < 1, \text{ and } 0 < \gamma < 1.$$

3. The positive electrode plate according to claim 1 or 2, wherein a volume-based median particle size $D_v50$ of the lithium supplementing agent is 2.5-12.5 $\mu$m, optionally 3.5-11.5 $\mu$m.

4. The positive electrode plate according to any one of claims 1 to 3, wherein a mass percentage p/q of the lithium supplementing agent in the first active layer is not less than 0.5% and not more than 12%, optionally not less than 2% and not more than 10%;
   wherein p is a ratio of a mass of the lithium supplementing agent in the first active layer to a total mass of the first active layer and the second active layer of the positive electrode plate; and q is a ratio of a mass of the first active layer to the total mass of the first active layer and the second active layer of the positive electrode plate.

5. The positive electrode plate according to any one of claims 1 to 4, wherein p is not more than 5% and not less than 0.2%, optionally 0.8%-4%.

6. The positive electrode plate according to any one of claims 1 to 5, wherein q is 10%-70%, optionally 20%-60%.

7. The positive electrode plate according to any one of claims 1 to 6, wherein the positive electrode active materials in the first active layer and the second active layer each comprise one or more of lithium-containing phosphate with an olivine structure, lithium transition metal oxide, and respective modified compounds thereof, optionally one or more of lithium iron phosphate and modified compounds thereof.

8. The positive electrode plate according to any one of claims 1 to 7, wherein the positive electrode active material in the first active layer and/or the second active layer comprises $Li_zFe_{1-k}Me_kPO_4$ and coating modified compounds thereof, wherein Me comprises one or more of Sc, V, Cr, Mn, Ti, Al, Co, Ni, Cu, and Zn, $0.8 \leq z \leq 1.3$, and $0 \leq k \leq 0.7$.

9. The positive electrode plate according to any one of claims 1 to 8, wherein a cycling voltage window of a secondary battery prepared from the positive electrode plate is 2.0-3.8 V or 2.0-4.1 V.

10. A lithium secondary battery, comprising the positive electrode plate according to any one of claims 1 to 9.

11. An application of the lithium secondary battery according to claim 10, wherein a cycling voltage window of the lithium secondary battery is 2.0-4.1 V.

12. The application according to claim 11, wherein the cycling voltage window of the lithium secondary battery is 2.0-3.8 V, or an upper limit voltage of a cycling voltage is 3.6-3.8 V, optionally 3.65-3.8 V.

13. An electric apparatus, comprising the lithium secondary battery according to claim 10.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2024/092845** |

### A. CLASSIFICATION OF SUBJECT MATTER

H01M4/36(2006.01)i;  H01M4/58(2010.01)i;  H01M4/505(2010.01)i;  H01M10/0525(2010.01)i

According to International Patent Classification (IPC) or to both national classification and IPC

### B. FIELDS SEARCHED

Minimum documentation searched (classification system followed by classification symbols)

IPC:H01M4/-; H01M10/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 电池, 正极, 活性材料, 补锂, 第二活性, 多晶, 氢氧化锰, 氢氧化镍, 容量保持, 锂, 锂锰氧, 锂镍铝氧, 锂镍锰氧, 锂镍铜氧, 锂镍氧, 锂镍钴锰, battery, anode, active, material, Co, Cu, Fe, li, Ni, Al, polycrystalline, Li1.8, Li1.5, Li1.1

### C. DOCUMENTS CONSIDERED TO BE RELEVANT

| Category* | Citation of document, with indication, where appropriate, of the relevant passages | Relevant to claim No. |
| --- | --- | --- |
| Y | CN 116014111 A (SHANGHAI LANJUN NEW ENERGY TECHNOLOGY CO., LTD.) 25 April 2023 (2023-04-25) description, paragraphs 6-30 | 1-13 |
| Y | CN 115832187 A (CONTEMPORARY AMPEREX TECHNOLOGY CO., LTD.) 21 March 2023 (2023-03-21) description, paragraphs 5-31 | 1-13 |
| Y | CN 113823786 A (CHINA UNIVERSITY OF MINING & TECHNOLOGY, BEIJING et al.) 21 December 2021 (2021-12-21) description, paragraph 2 | 1-13 |
| A | CN 105098188 A (BYD CO., LTD.) 25 November 2015 (2015-11-25) entire document | 1-13 |
| A | CN 107665988 A (NANTONG HENRY LITHIUM NEW MATERIALS CO., LTD.) 06 February 2018 (2018-02-06) entire document | 1-13 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 July 2024** | **16 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/092845** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 116114082 A (CONTEMPORARY AMPEREX TECHNOLOGY CO., LTD.) 12 May 2023 (2023-05-12)<br>entire document | 1-13 |
| A | US 2023083478 A1 (CONTEMPORARY AMPEREX TECHNOLOGY CO., LTD.) 16 March 2023 (2023-03-16)<br>entire document | 1-13 |

Form PCT/ISA/210 (second sheet) (July 2022)

## INTERNATIONAL SEARCH REPORT
### Information on patent family members

International application No.

**PCT/CN2024/092845**

| Patent document cited in search report | | | Publication date (day/month/year) | Patent family member(s) | | | Publication date (day/month/year) |
|---|---|---|---|---|---|---|---|
| CN | 116014111 | A | 25 April 2023 | None | | | |
| CN | 115832187 | A | 21 March 2023 | None | | | |
| CN | 113823786 | A | 21 December 2021 | None | | | |
| CN | 105098188 | A | 25 November 2015 | US | 2017133684 | A1 | 11 May 2017 |
| | | | | US | 10177382 | B2 | 08 January 2019 |
| | | | | EP | 3138145 | A4 | 08 March 2017 |
| | | | | EP | 3138145 | A1 | 05 June 2019 |
| | | | | WO | 2015165387 | A1 | 05 November 2015 |
| CN | 107665988 | A | 06 February 2018 | None | | | |
| CN | 116114082 | A | 12 May 2023 | None | | | |
| US | 2023083478 | A1 | 16 March 2023 | WO | 2023039717 | A1 | 23 March 2023 |
| | | | | KR | 20230042208 | A | 28 March 2023 |
| | | | | EP | 4177987 | A1 | 10 May 2023 |
| | | | | EP | 4177987 | A8 | 21 June 2023 |
| | | | | EP | 4177987 | A4 | 16 August 2023 |
| | | | | EP | 4177987 | B1 | 07 February 2024 |
| | | | | JP | 2023544927 | A | 26 October 2023 |
| | | | | JP | 7483044 | B2 | 14 May 2024 |

Form PCT/ISA/210 (patent family annex) (July 2022)

**REFERENCES CITED IN THE DESCRIPTION**

**Patent documents cited in the description**

- CN 202311075173